# FASCICULE DE BREVET EUROPEEN

(11) **EP 3 026 385 B1**
(45) Date de publication et mention de la délivrance du brevet: **18.10.2017**
(21) Numéro de dépôt: 15195749.5
(22) Date de dépôt: 23.11.2015
(51) Int. Cl.: F28D 20/00

(54) **CANNE CONFIGURABLE D'INJECTION OU DE SOUTIRAGE D'UN FLUIDE DANS UN RESERVOIR**
KONFIGURIERBARES ROHR ZUM EINSPRITZEN ODER AUSLASSEN EINER FLÜSSIGKEIT IN EINEM BEHÄLTER
CONFIGURABLE ROD FOR INJECTING OR DRAWING A FLUID IN A TANK

(30) Priorité: 24.11.2014 FR 1461390
(43) Date de publication de la demande: 01.06.2016
(73) Titulaire: Commissariat à l'Énergie Atomique et aux Énergies Alternatives, 75015 Paris (FR); Clipsol, 73100 Aix-Les-Bains (FR)
(72) Inventeur: MARIOTTO, Mathieu, 73290 LA MOTTE SERVOLEX (FR); PAULUS, Cédric, 73490 LA RAVOIRE (FR)
(74) Mandataire: GIE Innovation Competence Group

(56) Documents cités:
- DE-A1- 4 121 083
- DE-A1- 19 825 463
- DE-A1-102005 013 314
- DE-U1- 29 706 808
- FR-A1- 2 983 566

## Description

L'invention concerne une canne configurable d'injection ou de soutirage d'un fluide dans un réservoir selon le préambule de la revendication 1 et un dispositif de stockage et de distribution d'un fluide équipé de cette canne.

De l'état de la technique est connu de : DE4121083A1, DE2706808U1, DE102005013314A1, DE19825463A1 et FR2983566A1.

Des dispositifs connus de stockage et de distribution d'un fluide comportent :
- un réservoir apte à contenir le fluide,
- une canne configurable d'injection ou de soutirage du fluide contenu dans le réservoir, cette canne étant logée à l'intérieur de ce réservoir et apte à injecter ou à soutirer le fluide à un niveau réglable à l'intérieur du réservoir,
- un moteur commandable apte à modifier la configuration de la canne pour régler le niveau d'injection ou de soutirage du fluide,
- des capteurs de température pour mesurer la température à différents niveaux à l'intérieur du réservoir, et
- une unité de pilotage du moteur apte à commander le moteur en fonction des mesures des capteurs de température :
   - pour injecter le fluide dans une strate du fluide contenu à l'intérieur du réservoir dont la température est la plus proche de la température du fluide injecté, et/ou
   - pour soutirer du fluide stocké à l'intérieur du réservoir dans une strate dont la température est la plus proche d'une consigne de température pré-déterminée.

Les cannes connues d'injection ou de soutirage comportent :
- un tube interne et un tube externe s'étendant tous les deux autour d'un même axe de rotation, le tube externe entourant le tube interne, chaque tube comportant une paroi cylindrique imperméable au fluide et séparant l'intérieur du tube de l'extérieur du tube,
- plusieurs ouvertures Oᵢ réparties le long de l'axe de rotation à différents niveaux Nᵢ, chaque ouverture Oᵢ raccordant fluidiquement l'intérieur du tube interne à l'extérieur du tube externe pour injecter ou soutirer le fluide du réservoir, chacune de ces ouvertures Oᵢ étant réalisée par la mise en vis-à-vis d'une fente interne ménagée dans la paroi du tube interne et d'une fente externe ménagée dans la paroi du tube externe, la position des fentes interne et externe sur, respectivement, les tubes interne et externe étant telles que l'ouverture Oᵢ apparaît uniquement pour une position angulaire Pᵢ respective du tube interne par rapport au tube externe, où l'indice i est le numéro d'ordre du niveau Nᵢ, et
- une articulation permettant un déplacement en rotation, autour de l'axe de rotation, de l'un des tubes par rapport à l'autre pour passer d'une position angulaire Pᵢ quelconque à une autre position angulaire Pₖ quelconque et différente.

Par exemple, une telle canne connue est évoquée dans DE41 21 083 ainsi que dans la demande DE19953492A1. Le fonctionnement de cette canne connue va maintenant être abordé dans le cas particulier où celle-ci est utilisée pour injecter un fluide dans le réservoir. Toutefois, ce qui est décrit dans le cas de l'injection d'un fluide s'applique aussi au cas où cette même canne est utilisée pour soutirer un fluide.

Ces cannes sont, en particulier, utilisées dans des réservoirs où le fluide doit être stratifié. Ainsi, par gravité, le fluide le plus chaud monte et se trouve en haut du réservoir tandis que le fluide le plus froid descend et se trouve en bas du réservoir. Dès lors, à l'intérieur du réservoir 40, en absence de brassage du fluide, il existe un gradient de température vertical. Plus précisément, le fluide se répartit en strates horizontales empilées verticalement les unes au-dessus des autres. La température du fluide dans chaque strate est pratiquement homogène et est :
- supérieure à la température du fluide dans la strate immédiatement inférieure, et
- inférieure à la température du fluide dans la strate immédiatement supérieure.
C'est ce que l'on appelle ici la « stratification ».

De façon générale, pour que l'injection du fluide dans le réservoir perturbe le moins possible la stratification, il faut que le fluide soit injecté uniquement dans la strate ayant la température la plus proche possible de la température du fluide injecté. Cela incite donc à concevoir des cannes configurables ayant un grand nombre d'ouvertures et donc de niveaux d'injection possibles.

Dans les cannes connues ayant deux tubes concentriques déplaçables en rotation l'un par rapport à l'autre, si l'on veut accroître le nombre de niveaux possibles, il faut accroître le nombre d'ouvertures et donc de fentes réparties sur la périphérie du tube externe. Si le nombre de fentes augmente, la largeur de chacune de ces fentes doit être diminuée de manière à pouvoir toutes les répartir uniformément sur un seul tour complet du tube externe. Pour compenser cette diminution de la largeur des fentes, il n'est pas possible d'augmenter la hauteur des fentes. En effet, l'augmentation de la hauteur des fentes réduit la précision sur la sélection de la strate dans laquelle le fluide va être injecté. Plus précisément, si on augmente trop la hauteur de la fente, le fluide est injecté dans la strate ayant exactement la même température que le fluide injecté mais également dans des strates supérieure et inférieure de températures d'autant plus différentes que la hauteur de la fente est grande.

Dès lors, la diminution de la largeur des fentes conduit à diminuer le diamètre hydraulique des fentes et donc à accroître, pour un même débit, l'énergie cinétique du fluide injecté. Or, plus l'énergie cinétique du fluide injecté augmente, plus il crée des turbulences importantes qui détruisent la stratification du fluide contenu dans le réservoir. Ainsi, l'amélioration du maintien de la stratification espérée en augmentant le nombre d'ouvertures et de niveaux d'injection est annulée par l'augmentation de l'énergie cinétique du fluide injecté.

Pour remédier à ce problème, une première solution proposée a été d'augmenter le diamètre des tubes, ce qui permet d'augmenter le nombre de fentes sans réduire leur largeur. Toutefois, cette première solution conduit à accroître l'encombrement des tubes interne et externe, ce qui n'est pas souhaitable.

Une seconde solution est proposée dans la demande DE19953492. Elle consiste à déplacer les tubes l'un par rapport à l'autre non plus en rotation mais en translation. Dans ce cas, la largeur des fentes n'est plus contrainte par le diamètre des tubes. Toutefois, cette seconde solution augmente aussi l'encombrement de la canne. En effet, il faut alors prévoir dans le réservoir ou à l'extérieur du réservoir un dégagement suffisant pour recevoir le tube qui se déplace en translation.

L'invention vise à proposer une troisième solution à ce problème qui permette d'augmenter le nombre de niveaux d'injection possibles sans accroître le diamètre des tubes et sans avoir à prévoir un dégagement pour recevoir un tube qui se déplace en translation et non plus en rotation.

L'invention a donc pour objet une canne configurable conforme à la revendication 1.

Dans la canne ci-dessus, les tubes se déplacent en rotation l'un par rapport à l'autre et non pas en translation pour faire varier le niveau où se situe l'ouverture. Ainsi, il n'est pas nécessaire de prévoir un dégagement pour recevoir un tube qui se déplace en translation.

De plus, dans la canne ci-dessus, le nombre d'ouvertures réparties le long de l'axe de rotation peut être augmenté sans pour autant augmenter le diamètre des tubes interne et externe. En effet, dans la canne ci-dessus, l'augmentation du nombre d'ouvertures Oᵢ est, par exemple, obtenue en diminuant la largeur des ouvertures et donc en augmentant l'énergie cinétique du fluide injecté à travers l'ouverture Oᵢ. Toutefois, dans la canne ci-dessus, un diffuseur est placé en face de chaque ouverture pour limiter la capacité du jet de fluide à perturber la stratification du fluide. Plus précisément, le fluide injecté vient percuter la cloison en vis-à-vis de l'ouverture Oᵢ, ce qui diminue son énergie cinétique. De plus, les plaques supérieure et inférieure limitent le déplacement vers des strates supérieure et inférieure du fluide injecté après que celui-ci ait percuté la cloison. Ainsi, l'accroissement de l'énergie cinétique du fluide injecté ne vient plus complètement annuler l'avantage associé à la présence d'un plus grand nombre d'ouvertures et d'un plus grand nombre de niveaux d'injection. Il est donc possible de fabriquer une canne configurable ayant un nombre de niveaux d'injection supérieur au nombre de niveaux d'injection des cannes connues tout en conservant la même aptitude à ne pas perturber la stratification que les cannes connues. De façon correspondante, il est également possible de fabriquer une canne configurable ayant un nombre de niveaux égal à celui des cannes connues mais en utilisant des tubes interne et externe de diamètre inférieur et cela tout en conservant la même aptitude à ne pas perturber la stratification.

Les modes de réalisation de cette canne peuvent comporter une ou plusieurs des caractéristiques des revendications dépendantes.

Ces modes de réalisation de la canne présentent en outre les avantages suivants :
- L'utilisation d'une cloison qui s'enroule autour du tube externe et dont le dernier tour est perméable permet à la fois de réduire l'énergie cinétique du fluide injecté tout en permettant de diffuser le fluide injecté dans la strate choisie sur 360°. Cela améliore le maintien de la stratification du fluide.
- L'utilisation d'une cloison dont la perméabilité augmente au fur et à mesure que l'on s'éloigne du tube externe permet d'uniformiser l'énergie cinétique du fluide injecté dans toutes les directions.
- Le fait que la cloison fasse au moins deux tours complets autour de l'axe de rotation permet de diminuer encore plus efficacement l'énergie cinétique du fluide injecté et donc d'améliorer le maintien de la stratification du réservoir.
- Le fait que la cloison comporte une portion imperméable au fluide directement en vis-à-vis de l'ouverture permet d'améliorer la diminution de l'énergie cinétique du fluide injecté.
- L'utilisation d'une fente continue qui s'enroule autour de l'axe de rotation et d'une autre fente continue non-parallèle permet d'obtenir presque une infinité de niveaux possible d'injection.
- Le fait de fixer le diffuseur sur une traverse montée à coulissement à la fois dans les fentes continues interne et externe permet de n'utiliser qu'un seul et même diffuseur pour tous les niveaux d'injection.
- Utiliser un diffuseur qui libère le fluide injecté à l'intérieur de la strate à travers des orifices dont le cumul des diamètres hydrauliques est supérieur au diamètre hydraulique de l'ouverture permet de diminuer l'énergie cinétique du fluide injecté.
- La présence d'un angle approximativement égal à 180° entre les premier et second demi-plans permet de maximiser la diminution de l'énergie cinétique du fluide injecté.
- Utiliser plusieurs ouvertures au même niveau au lieu d'une seule permet d'homogénéiser la répartition du fluide injecté tout autour du tube externe.

L'invention a également pour objet un dispositif de stockage d'un fluide comportant la canne configurable ci-dessus.

L'invention sera mieux comprise à la lecture de la description qui va suivre, donnée uniquement à titre d'exemple non limitatif tout en se référant aux dessins sur lesquels :
- la figure 1 est une illustration schématique d'une installation de chauffage ;
- la figure 2 est une illustration schématique et en perspective d'une canne d'injection d'eau ;
- les figures 3 et 4 sont des illustrations schématiques et en perspective, respectivement, d'un tube interne et d'un tube externe de la canne de la figure 2 ;
- la figure 5 est une illustration schématique partielle, en perspective, et en vue depuis l'intérieur du tube interne, de l'assemblage des tubes interne et externe des figures 3 et 4 ;
- la figure 6 est une illustration schématique en coupe verticale d'une articulation 120 de la canne de la figure 2 ;
- la figure 7 est une illustration schématique et en perspective d'un diffuseur de la canne de la figure 2 ;
- la figure 8 est une illustration schématique partielle et en perspective du diffuseur de la figure 7 ;
- la figure 9 est une illustration schématique et en perspective d'un autre mode de réalisation du diffuseur de la figure 7 ;
- la figure 10 est une illustration schématique en coupe horizontale d'une cloison du diffuseur de la figure 9 ;
- la figure 11 est une illustration schématique et en perspective d'un autre mode de réalisation des tubes interne et externe des figures 3 et 4 ;
- la figure 12 est une illustration schématique et en perspective d'un autre mode de réalisation du tube externe de la figure 4 ;
- la figure 13 est une illustration schématique et en perspective d'une traverse susceptible d'être utilisée en combinaison avec le tube externe de la figure 12.

Dans ces figures, les mêmes références sont utilisées pour désigner les mêmes éléments. Dans la suite de cette description, les caractéristiques et les fonctions bien connues de l'homme du métier ne sont pas décrites en détail.

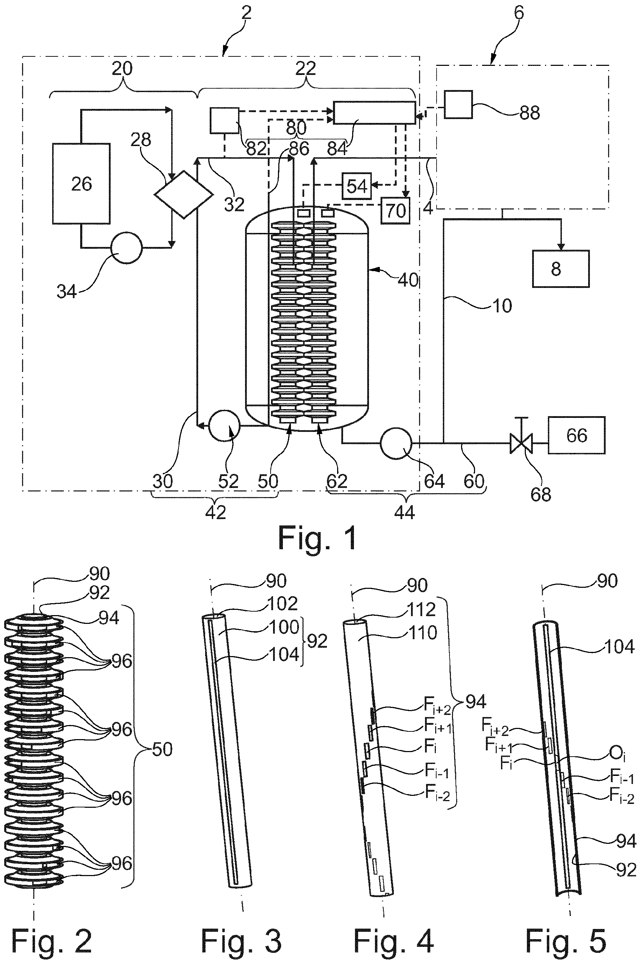

La figure 1 représente une installation 2 de chauffage d'un fluide caloporteur. L'installation 2 est raccordée fluidiquement, par l'intermédiaire d'une canalisation 4, à un système 6 qui exploite et consomme le fluide chauffé pour un usage particulier.

Dans la suite de cette description, à moins d'une indication contraire, le terme « raccorder » signifie « raccorder fluidiquement ». Les termes « supérieure », « inférieure », « au-dessus » et « au-dessous », sont définis par rapport à la direction verticale. De plus, la suite de la description est faite dans le cas particulier où le fluide caloporteur est un liquide et, plus précisément, de l'eau.

Ici, le système 6 est un système d'usage domestique ou collectif de l'eau chauffée. Typiquement, le système 6 est raccordé :
- à un réseau 8 d'évacuation de l'eau chauffée après qu'elle ait été utilisée, et/ou
- à une canalisation 10 qui renvoie directement l'eau chaude utilisée vers l'installation 2 pour y être à nouveau chauffée.

Le système 6 est par exemple un système de distribution d'eau chaude sanitaire ou un système de chauffage d'un bâtiment comportant un ou plusieurs radiateurs traversés par l'eau chaude. Lorsque le système 6 est un système de distribution d'eau chaude sanitaire, l'eau chauffée est rejetée après usage vers le réseau 8. Dans ce cas, le réseau 8 est typiquement un réseau d'assainissement d'eau. Ainsi, dans le cas d'un système de distribution d'eau sanitaire, l'eau chauffée n'est pas directement renvoyée à l'installation 2 pour y être à nouveau chauffée. Lorsque le système 6 est un système de chauffage, après avoir circulé dans les radiateurs, l'eau est typiquement directement renvoyée vers l'installation 2, par l'intermédiaire de la canalisation 10, pour y être chauffée à nouveau.

L'installation 2 comporte un chauffe-eau 20 et un dispositif 22 de stockage et de distribution de l'eau chauffée. Dans le cas particulier décrit ici, le chauffe-eau 20 est un chauffe-eau solaire. Les chauffe-eau solaires étant bien connus, seuls quelques détails de ce chauffe-eau 20 sont donnés ici.

Le chauffe-eau 20 comporte typiquement :
- un ou plusieurs panneaux solaires 26 à l'intérieur desquels circule un fluide caloporteur,
- un échangeur thermique 28 à l'intérieur duquel le fluide caloporteur chauffe de l'eau froide amenée par une canalisation 30 et refoule l'eau chauffée dans une canalisation 32, et
- une pompe 34 qui fait circuler le fluide caloporteur d'une sortie des panneaux solaires 26 vers une entrée de l'échangeur 28, puis d'une sortie de l'échangeur 28 vers une entrée des panneaux solaires 26.

Le dispositif 22 comporte :
- un réservoir 40 à l'intérieur duquel est stockée l'eau chauffée par le chauffe-eau 20,
- un circuit 42 d'alimentation du réservoir 40 en eau chaude, et
- un circuit 44 de soutirage d'eau chaude à partir du réservoir 40.

Ici, le réservoir 40 est un ballon d'eau chaude de capacité maximale Vₘₐₓ. La capacité Vₘₐₓ est typiquement comprise entre 50 L et 3000 L et, le plus souvent, comprise entre 100 L et 800 L.

Ici, le réservoir 40 comprend un cylindre circulaire vertical de diamètre Φ_{c} et de hauteur Hₜ. Les parties inférieure et supérieure de ce cylindre sont obturées par des calottes, respectivement inférieure et supérieure. Typiquement, ces calottes sont hémisphériques. Le rapport Hₜ/Φ_{c} est typiquement compris entre 3 et 4,5 pour faciliter l'apparition et le maintien d'une stratification de l'eau à l'intérieur du réservoir 40.

Par exemple, la hauteur Hₜ est comprise entre 1 et 3 m et, de préférence, entre 1 et 2 m. Le diamètre Φ_{c} est typiquement compris entre 25 cm et 1 m et, de préférence, entre 25 cm et 70 cm.

Pour conserver l'eau chaude, les parois du réservoir 40 sont calorifugées. A cet effet, les parois du réservoir 40 sont réalisées dans un matériau ou un assemblage de matériaux thermiquement isolants. Par « thermiquement isolant » on désigne le fait que la conductivité thermique de ce matériau ou de cet assemblage de matériaux, à 20°C, est inférieure à 1 W/m/K et, de préférence, inférieure à 0,1 W/m/K.

Le circuit 42 permet de remplir le réservoir 40 avec l'eau chauffée par le chauffe-eau 20. A cet effet, il comporte :
- les canalisations 30 et 32,
- une canne 50 configurable d'injection de l'eau chauffée dans le réservoir 40, et
- une pompe 52 pour faire circuler l'eau chaude, à l'intérieur de la canalisation 32, de l'échangeur 28 vers l'intérieur du réservoir 40 et pour faire circuler l'eau froide, à l'intérieur de la canalisation 30, du réservoir 40 vers l'échangeur 28.

L'extrémité de la canalisation 32, opposée à son extrémité raccordée à l'échangeur 28, est directement raccordée à l'intérieur de la canne 50.

La canne 50 est située à l'intérieur du réservoir 40. Elle s'étend verticalement depuis la calotte inférieure jusqu'à la calotte supérieure du réservoir. Pour cela, la canalisation 32 traverse la paroi du réservoir 40.

La canne 50 permet d'injecter de l'eau chaude à l'intérieur du réservoir 40 en perturbant le moins possible la stratification. Pour cela, la canne 50 injecte uniquement et directement l'eau chaude, amenée par la canalisation 32, à l'intérieur de la strate ayant la température la plus proche de l'eau chaude injectée.

La température de l'eau chaude injectée peut varier, par exemple, en fonction de l'ensoleillement. De même, la position d'une strate de température donnée à l'intérieur du réservoir 40 peut varier. Pour s'adapter à ces variations de température, le niveau d'injection de l'eau chaude peut être modifié. Par « niveau », on désigne l'altitude. Pour cela, la canne 50 se déplace entre différentes positions angulaire Pᵢ, chaque position Pᵢ correspondant à un niveau Nᵢ différent des autres niveaux. Chaque niveau Nᵢ correspond à une altitude à laquelle l'eau chaude peut être injectée à l'intérieur du réservoir 40. La canne 50 injecte l'eau chaude à un seul niveau à la fois. Pour déplacer la canne 50 entre ses différentes positions Pᵢ, le dispositif 22 comporte un moteur 54 commandable. Par exemple, ce moteur 54 est situé en dehors du réservoir 50. La canne 50 est décrite plus en détail en référence aux figures 2 à 8.

L'extrémité de la canalisation 30, opposée à son extrémité raccordée à l'échangeur 28, est raccordée à la partie basse du réservoir 40 pour soutirer l'eau froide. La canalisation 30 traverse la calotte inférieure et débouche directement dans la partie basse du réservoir 40 à l'extérieur de la canne 50.

La pompe 52 est ici montée sur la canalisation 30.

Le circuit 44 de soutirage d'eau chaude comporte:
- la canalisation 4,
- la canalisation 10 et/ou une canalisation 60,
- une canne 62 de soutirage d'eau chaude située à l'intérieur du réservoir 40, et
- une pompe 64 pour faire circuler l'eau de la canalisation 10 ou 60 vers l'intérieur du réservoir 40.

L'extrémité de la canalisation 4, opposée à son extrémité raccordée au système 6, est raccordée directement à l'intérieur de la canne 62.

La canalisation 60 est raccordée à un réseau 66 de distribution d'eau froide par l'intermédiaire d'une vanne 68. L'autre extrémité de la canalisation 60 est raccordée à la partie basse du réservoir 40 à l'extérieur de la canne 62.

L'extrémité de la canalisation 10, opposée à celle raccordée au système 6, est aussi raccordée à la partie basse du réservoir 40 à l'extérieur de la canne 62.

La canne 62 permet de soutirer l'eau chaude stockée dans le réservoir 40 pour l'amener, par l'intermédiaire de la canalisation 4, au système 6. Pour cela, la canne 62 soutire l'eau chaude directement dans la strate ayant la température la plus proche possible d'une consigne C_{T} de température. Ici, la canne 62 est identique à la canne 50. Ainsi, par la suite, seule la canne 50 est décrite en détail. La canne 62 est déplacée entre ses différentes positions Pᵢ par un moteur 70 commandable.

La pompe 64 est montée sur une partie de canalisation commune aux canalisations 10 et 60. Elle permet de faire circuler de l'eau refroidie ou de l'eau froide dans les canalisations 10 et 60 pour l'injecter dans la partie basse du réservoir 40.

Le dispositif 22 comporte aussi une unité 80 de pilotage automatique des moteurs 54 et 70. Cette unité 80 comporte :
- un capteur 82 de la température de l'eau chaude à injecter, par exemple, placée sur ou à l'intérieur de la canalisation 32,
- des capteurs de température aptes à mesurer la température du fluide stocké à l'intérieur du réservoir 40 à différents niveaux, et
- un calculateur 84 apte à commander les moteurs 54 et 70 en fonction des températures mesurées par les capteurs et de la consigne C_{T} de température transmise par le système 6.

Ici, les capteurs qui mesurent la température de l'eau stockée sont fixés à différentes altitudes sur une canne instrumentée 86. La canne 86 s'étend verticalement à l'intérieur du réservoir 40 depuis sa partie basse jusqu'à sa partie haute. La canne 86 comporte au moins des capteurs de température situés, respectivement, dans les parties haute et basse du réservoir 40. Elle peut également comporter un ou plusieurs capteurs de température situés entre ces parties haute et basse. Par partie haute et partie basse du réservoir 40, on désigne ici, respectivement, le tiers supérieur et le tiers inférieur du réservoir 40. Pour simplifier la figure 1, les capteurs de température fixés sur la canne 86 n'ont pas été représentés.

A titre d'illustration, le système 6 comporte un module 88 qui génère la consigne C_{T} en fonction de valeurs mesurées ou préenregistrées de différents paramètres du système 6. Ce module 88 communique la consigne C_{T} au calculateur 84.

Le calculateur 84 est par exemple un calculateur électronique programmé pour mettre en oeuvre le fonctionnement du dispositif 22 décrit ci-dessous.

L'eau chauffée par le chauffe-eau 20 est acheminée par la canalisation 32 jusqu'à la canne 50 qui l'injecte à l'intérieur du réservoir 40. En même temps, la même quantité d'eau froide est pompée, par la pompe 52, dans la partie basse du réservoir 40 et acheminée vers l'échangeur 28 par l'intermédiaire de la canalisation 30.

En parallèle, le capteur 82 mesure la température de l'eau chauffée et les capteurs de la canne 86 mesurent la température de l'eau stockée à l'intérieur du réservoir 40. Ces mesures sont transmises puis acquises par le calculateur 84 qui détermine à partir de ces mesures le niveau auquel se situe la strate ayant la même température ou la température la plus proche de la température de l'eau à injecter. La température de l'eau à injecter est obtenue à partir de la mesure du capteur 82. Ensuite, le calculateur 84 commande le moteur 54 pour que la canne 50 passe automatiquement dans une position où celle-ci injecte l'eau directement au niveau de la strate ayant la même température ou la température la plus proche de la température de l'eau injectée.

En parallèle, le calculateur 84 acquiert également la consigne C_{T}. Ensuite, en fonction des mesures de température des capteurs de la canne 86, le calculateur 84 détermine le niveau de la strate ayant la température la plus proche de la consigne C_{T}. Puis, le calculateur 84 commande le moteur 70 pour faire passer la canne 62 dans une position où celle-ci soutire l'eau directement au niveau de la strate ayant la température la plus proche de la consigne C_{T}.

Les commandes des moteurs 54 et 70 peuvent être réalisées en parallèle et simultanément ou, au contraire, en alternance.

La figure 2 représente plus en détail la canne 50. La canne 50 s'étend le long d'un axe 90 de rotation vertical. Elle comporte en son centre :
- un tube interne 92 (figure 3),
- un tube externe 94 (figure 4) disposé autour du tube 92, et
- des diffuseurs 96 à chaque niveau Nᵢ possible d'injection d'eau chaude.

Dans ce mode de réalisation, les diffuseurs 96 sont identiques pour chaque niveau Nᵢ et diffèrent donc seulement les uns des autres par leurs positions le long du tube 94.

La figure 3 représente plus en détail le tube interne 92. Le tube 92 comporte une paroi 100, imperméable à l'eau, délimitant un creux cylindrique 102 situé à l'intérieur du tube 92.

Le creux 102 est raccordé à la canalisation 32, par exemple, par l'intermédiaire de son extrémité supérieure. L'extrémité inférieure du tube 92 est obturée de façon imperméable pour isoler le creux 102 de l'eau froide contenue dans la partie basse du réservoir 40.

La paroi 100 est un cylindre de révolution vertical dont la courbe directrice est un cercle centré sur l'axe 90 et dont la génératrice est parallèle à l'axe 90. Cette paroi 100 est traversée par une fente continue 104.

De préférence, la hauteur du tube 92 est supérieure ou égale à 0,8 H_{T} ou 0,9 H_{T} de manière à s'étendre sur presque la totalité ou sur la totalité de la hauteur du réservoir 40. Par exemple, la hauteur du tube 92 est de 1,5 m et son diamètre intérieur est égal à 60 mm et son diamètre extérieur est égal à 65 mm.

La fente 104 est rectiligne et verticale. Elle s'étend continûment sur plus de 80 % ou 90 % de la hauteur du tube 92. La hauteur de la fente 104 est par exemple de 1,48 m.

Dans ce mode de réalisation, le tube 92 est fixé sans aucun degré de liberté au réservoir 40, par exemple, au niveau de ses extrémités supérieure et inférieure.

La figure 4 représente plus en détail le tube externe 94. Le tube 94 comporte une paroi 110 imperméable à l'eau et délimitant un creux cylindrique 112 situé à l'intérieur du tube 94. Le tube 92 est reçu à l'intérieur du creux 112. L'extrémité inférieure du tube 94 est obturée pour isoler le creux 112 de l'eau froide présente dans la partie basse du réservoir 40.

La paroi 110 est aussi un cylindre de révolution vertical dont la courbe directrice est un cercle centré sur l'axe 90 et dont la génératrice est parallèle à l'axe 90. Cette paroi 110 est traversée de part en part par N_{c} fentes F₁ à F_{Nc}. Les fentes Fᵢ₋₂, Fᵢ₋₁, Fᵢ, Fᵢ₊₁ et Fᵢ₊₂, situées sur la face avant de la paroi 110, sont directement visibles sur la figure 4. Les rectangles non référencés, en trait fin, sur la figure 4 représentent des fentes F₁ situées sur la face arrière de la paroi 110 et qui ne sont pas directement visibles. L'indice i identifie le niveau Nᵢ à laquelle se situe la fente Fᵢ. Ainsi, la fente Fᵢ est située au niveau Nᵢ. Ici, les niveaux Nᵢ sont classés par ordre croissant d'altitude.

De préférence, la paroi 110 comme la paroi 100 sont réalisées dans des matériaux thermiquement isolants tels qu'un polymère.

La hauteur du tube 94 est égale à la hauteur du tube 92 à plus ou moins 10 % près ou plus ou moins 5 % près. Le diamètre intérieur du tube 94 est égal au diamètre extérieur du tube 92 plus un jeu. Le jeu est suffisamment large pour permettre au tube 94 de tourner autour du tube 92. Par exemple, ce jeu est supérieur à 1 ou 2 mm. Le diamètre intérieur du tube 94 est par exemple ici égal à 70 mm et son diamètre extérieur est égal à 75 mm.

Dans ce mode de réalisation, les fentes Fᵢ sont structurellement identiques les unes aux autres et diffèrent seulement les unes des autres par leurs positions sur la périphérie du tube 94. Ici, la fente Fᵢ est rectangulaire. Elle s'étend verticalement d'un bord supérieur horizontal jusqu'à un bord inférieur horizontal. Elle s'étend, dans la direction horizontale, depuis un bord vertical gauche jusqu'à un bord vertical droit. Le bord supérieur de la fente Fᵢ est situé à une altitude inférieure ou égale à l'altitude du bord inférieur de la fente Fᵢ₊₁. Le bord inférieur de la fente Fᵢ est situé à une altitude supérieure ou égale à l'altitude du bord supérieur de la fente Fᵢ₋₁. Ainsi, chaque fente Fᵢ est située à un niveau Nᵢ différent du niveau auquel sont situées les autres fentes.

En plus d'être située à des niveaux différents, chaque fente Fᵢ est décalée angulairement par rapport aux autres fentes autour de l'axe 90 de manière à occuper un secteur angulaire respectif Sᵢ. Plus précisément, le secteur angulaire Sᵢ est défini par un premier et un second demi-plans verticaux ayant une frontière commune confondue avec l'axe 90. Le premier demi-plan passe par le bord vertical droit de la fente Fᵢ₋₁ et le second demi-plan passe par le bord vertical gauche de la fente Fᵢ₊₁. Les bords verticaux droit et gauche de la fente Fᵢ sont compris entre ou contenus à l'intérieur de ces premier et second demi-plans verticaux du secteur Sᵢ.

Dans ce mode de réalisation, tous les secteurs angulaires Sᵢ ont des angles au sommet identiques de manière à répartir uniformément les fentes Fᵢ sur la totalité de la périphérie circulaire de la paroi 110. Avec un tel positionnement des fentes Fᵢ, ces fentes Fᵢ sont chacune centrées sur une trajectoire hélicoïdale qui s'enroule autour de l'axe 90 et fait moins d'un tour complet autour de l'axe 90. Par exemple, la largeur des fentes Fᵢ est égale à 13,5 mm, ce qui permet de réaliser douze fentes Fᵢ dans la paroi 110 et donc d'avoir douze niveaux Nᵢ différents. La hauteur des fentes Fᵢ est, par exemple, égale à 98,4 mm.

La largeur de la fente 104 est telle que ses bords verticaux sont tous les deux compris entre ou contenus à l'intérieur des premier et second demi-plans verticaux définissant le secteur angulaire Sᵢ lorsque les fentes 104 et Fᵢ sont en vis-à-vis. Les fentes 104 et Fᵢ sont considérées comme étant en vis-à-vis lorsque la surface de l'intersection entre les projections orthogonales des fentes 104 et Fᵢ sur un plan perpendiculaire à l'axe horizontal passant par l'axe 90 et le centre géométrique de la fente Fᵢ, est maximale. Le centre géométrique de la fente Fᵢ est le barycentre de tous les points appartenant au bord de cette fente et en affectant à chacun de ces points le même coefficient de pondération. De préférence, la largeur de la fente 104 est également supérieure ou égale à celle de la fente Fᵢ. Ici, la largeur de la fente 104 est égale à la largeur de la fente Fᵢ.

Il existe donc une position angulaire Pᵢ du tube 94 par rapport au tube 92 dans laquelle seule la fente Fᵢ est en vis-à-vis de la fente 104. Dans cette position Pᵢ, la mise en vis-à-vis des fentes Fᵢ et 104 réalise une ouverture Oᵢ au niveau Nᵢ. Cette ouverture Oᵢ raccorde directement le creux 102 à l'extérieur du tube 94. C'est donc par l'intermédiaire de cette ouverture Oᵢ que l'eau chaude est injectée dans le réservoir 40.

Cette position Pᵢ est représentée sur la figure 5. Sur la figure 5, les fentes Fᵢ₊₂, Fᵢ₊₁, Fᵢ₋₁ et Fᵢ₋₂ sont représentées mais ne sont pas en réalité directement visibles depuis le creux 102.

On comprend qu'en commandant le moteur 54 pour faire tourner sur lui-même le tube 94 autour de l'axe 90, le calculateur 84 modifie la configuration de la canne 50 pour régler le niveau auquel l'eau chaude est injectée. De plus, dans ce mode de réalisation particulier, les positions Pᵢ sont classées par ordre croissant de niveaux Nᵢ.

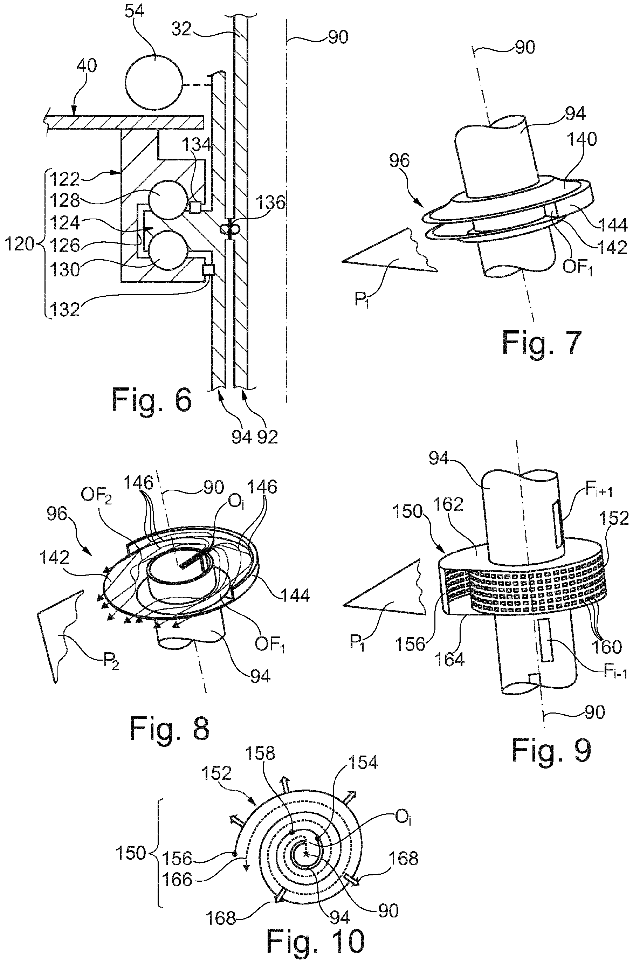

La figure 6 représente la moitié gauche d'un exemple d'une articulation 120 permettant au tube 94 de tourner sur lui-même autour du tube 92. L'autre moitié de l'articulation 120 se déduit par symétrie par rapport à l'axe 90. Une articulation similaire, située dans la partie basse du réservoir 40, attache les parties inférieures des tubes 94 et 92.

L'articulation 120 comporte :
- un anneau horizontal 122 centré sur l'axe 90 et fixé sans aucun degré de liberté à la paroi du réservoir 40, et
- un épaulement circulaire 124 centré sur l'axe 90 et fixé sans aucun degré de liberté sur la périphérie extérieure du tube 94.

L'anneau 122 est par exemple formé par l'assemblage de deux demi-anneaux pour faciliter son montage sur le tube 94.

L'épaulement 124 présente une face annulaire horizontale supérieure et une face annulaire horizontale inférieure.

L'anneau 122 comprend une rainure 126 de section verticale rectangulaire débouchant directement en face du tube 94. Cette rainure 126 présente une face horizontale supérieure et une face horizontale inférieure.

L'épaulement 124 est reçu à l'intérieur de cette rainure 126. Des roulements à billes 128 et 130 sont logés entre :
- la face supérieure horizontale de la rainure 126 et la face annulaire horizontale supérieure de l'épaulement 124, et
- la face horizontale inférieure de la rainure 126 et la face horizontale annulaire inférieure de l'épaulement 124.

Ces roulements 128 et 130 immobilisent le tube 94 dans la direction verticale tout en le laissant libre de tourner sur lui-même autour de l'axe 90.

L'étanchéité à l'eau entre le tube 94 et l'articulation 122 est assurée par un ou plusieurs joints. Ici, l'articulation 120 comporte :
- un joint annulaire 132 en téflon coincé entre l'anneau 122 et la périphérie extérieure du tube 94, et
- un joint annulaire 134 en téflon coincé entre la face horizontale supérieure de la rainure 126 et la face horizontale annulaire supérieure de l'épaulement 124.

Enfin, l'articulation 120 comporte un roulement à billes 136 interposé entre la face intérieure du tube 94 et la face extérieure du tube 92. Ce roulement 136 maintient un jeu constant entre ces deux tubes tout en laissant le tube 94 libre de tourner autour du tube 92.

A titre d'illustration, l'extrémité du tube 94 fait saillie au-delà de la calotte supérieure du réservoir 40 et s'engrène avec le moteur 54 qui le déplace en rotation autour de l'axe 90. Le tube 92 est immobile et son extrémité supérieure est uniquement raccordée à la canalisation 32.

Les figures 7 et 8 représentent plus en détail le diffuseur 96 fixé sans aucun degré de liberté sur le tube 94 en face de la fente Fᵢ. Sur la figure 8, le diffuseur 96 est représenté dans le cas particulier où la canne 50 est dans sa positon Pᵢ. Par conséquent seule l'ouverture Oᵢ est illustrée.

Le diffuseur 96 comporte :
- une plaque supérieure 140 qui s'étend principalement parallèlement à un plan horizontal,
- une plaque inférieure 142 qui s'étend principalement parallèlement au même plan horizontal, et
- une cloison verticale 144 en vis-à-vis de l'ouverture Oᵢ.

Ici, les plaques 140 et 142 sont symétriques l'une de l'autre par rapport à un plan médian horizontal P₁. Le plan P₁ est le plan horizontal passant par le centre géométrique de la fente Fᵢ. Par la suite, seule la plaque 140 est décrite en détail. De même, la cloison 144 est symétrique par rapport au plan P₁.

Le diffuseur 96 présente aussi un plan de symétrie vertical P₂ contenant l'axe 90 et passant par le centre géométrique de la fente Fᵢ.

L'intersection de la cloison 144 et du plan P₁ suit une trajectoire en arc de cercle comprise entre deux demi-plans verticaux droit et gauche. Le rayon de cet arc de cercle est choisi pour que la distance qui sépare le centre géométrique de l'ouverture Oᵢ de sa projection orthogonale sur la cloison 144, le long d'une direction radiale perpendiculaire à l'axe 90 est passant par ce centre géométrique, soit inférieure à une limite L_{d}. De préférence, le centre géométrique de l'ouverture Oᵢ est confondu avec le centre géométrique de la fente Fᵢ. La limite L_{d} est comprise entre Dₕ et 10*Dₕ et, de préférence, entre Dₕ et 5*Dₕ, où Dₕ est le diamètre hydraulique de l'ouverture Oᵢ. Le diamètre hydraulique Dₕ est égal à 4A/P, où A est la surface de l'ouverture Oᵢ et P est le périmètre mouillé de l'ouverture Oᵢ. Le diamètre hydraulique d'une ouverture circulaire est donc égal au diamètre de cette ouverture circulaire.

Ici, la limite L_{d} est inférieure à 5 cm et, de préférence, inférieure à 3 cm ou 2 cm. Par exemple, le rayon de l'arc de cercle est égal à 80 mm. Pour clarifier les figures 7 et 8, celles-ci ne sont pas représentées à l'échelle.

Les demi-plans verticaux droit et gauche ont une frontière commune confondue avec l'axe 90. Ces demi-plans définissent donc un secteur angulaire contenant entièrement la cloison 144. L'angle α au sommet de ce secteur angulaire est typiquement compris entre 120° et 240° et, de préférence, égal à 180° à plus ou moins 10 % près ou à plus ou moins 5 % près. Ici, l'angle α est égal à 180°.

La plaque 140 s'étend essentiellement horizontalement depuis le bord supérieure de la fente Fᵢ jusqu'au bord supérieur de la cloison 144. Elle recouvre la totalité de l'espace situé entre les bords de la cloison 144. De plus, la plaque 140 se prolonge également au-delà du secteur angulaire. Ici, elle fait le tour complet du tube 94. Par exemple, la plaque 140 est un disque circulaire en forme d'assiette renversée centrée sur l'axe 90. Ici, la plaque 140 est symétrique par rapport au plan vertical P₂.

La plaque 140 et la cloison 144 sont imperméables à l'eau. La plaque 140 et la cloison 144 sont donc dépourvues d'orifice ou de pore les traversant de part en part.

Sur la figure 8, les flèches 146 représentent la circulation de l'eau chaude injectée à l'intérieur du diffuseur 96. La cloison 144 brise le jet d'eau qui jaillit de l'ouverture Oᵢ et diminue son énergie cinétique. De plus, la cloison 144 et les plaques 140 et 142 diffusent l'eau chaude injectée dans l'eau contenue à l'intérieur du réservoir à travers des orifices OF₁ et OF₂. Ces orifices OF₁ et OF₂ sont situés, respectivement, dans les demi-plans verticaux droit et gauche. Chacun de ces orifices OF₁ et OF₂ est délimité par le tube 94, un bord vertical de la cloison 144 et les plaques 140 et 142. Les dimensions du diffuseur 96 sont choisies pour que le cumul des diamètres hydrauliques des orifices OF₁ et OF₂ soit strictement supérieur au diamètre hydraulique Dₕ de l'ouverture Oᵢ et, de préférence, au moins 1,5 ou 2 ou 3 fois supérieur au diamètre Dₕ. Cette configuration du diffuseur 96 permet de diminuer encore plus l'énergie cinétique de l'eau injectée à l'intérieur du réservoir 40 et donc de limiter l'apparition de turbulences susceptibles de détruire la stratification. On peut donc simultanément réduire la largeur des fentes Fᵢ pour augmenter le nombre de niveau Nᵢ sans augmenter le diamètre des tubes 92 et 94 et cela tout en limitant suffisamment les turbulences créées par l'eau injectée à travers l'ouverture Oᵢ.

Les figures 9 et 10 représentent un diffuseur 150 apte à être utilisé en lieu et place du diffuseur 96. Le diffuseur 150 est représenté dans le cas particulier où il est fixé en vis-à-vis de l'ouverture Oᵢ. Le diffuseur 150 comprend une cloison 152 qui s'enroule autour du tube 94 en s'éloignant au fur et à mesure de l'axe 90 pour former une spirale. La cloison 152 est symétrique par rapport au plan P₁. Par exemple, la cloison 152 est un mur vertical. Ici, la cloison 152 s'étend depuis un bord proximal 154 fixé directement sur le tube 94 jusqu'à un bord vertical libre 156. Ces bords 154 et 156 sont représentés par des points sur la figure 10.

La cloison 152 fait au moins un tour complet autour de l'axe 90, et, de préférence, au moins deux ou trois tours complets.

En allant du bord 154 vers le bord 156, la cloison 152 présente successivement une portion imperméable à l'eau puis une portion perméable à l'eau. Ici, la portion imperméable s'étend du bord 154 jusqu'à une limite verticale 158 représentée par un point sur la figure 10.

La portion imperméable se trouve directement en vis-à-vis de l'ouverture Oᵢ. Elle présente une surface en vis-à-vis de cet ouverture Oᵢ au moins supérieure ou égale à la surface de la section transversale de l'ouverture Oᵢ.

Ensuite, la portion imperméable se prolonge depuis la limite 158 jusqu'au bord 156 par la portion perméable. La portion perméable fait au moins un tour complet autour de l'axe 90. Elle constitue donc en outre le tour complet le plus éloigné de l'axe 90. Par exemple, la cloison 152 est rendue perméable en réalisant des pores 160 qui la traversent horizontalement. Pour simplifier la figure 9, la référence 160 pointe seulement sur quelques-uns des pores 160. Ici, ces pores 160 sont des trous, circulaires ou rectangulaires, traversant la cloison 152. Ces pores 160 sont uniquement réalisés dans la portion perméable.

De plus, dans ce mode de réalisation, la perméabilité à l'eau de la portion perméable augmente au fur et à mesure que l'on se rapproche du bord 156. Par exemple, pour cela, la section transversale des pores 160 augmente au fur et à mesure que l'on se rapproche du bord 156. Ici, le nombre de pores par unité de surface est constant sur toute la longueur de la portion perméable.

A titre d'illustration, la surface de la section transversale des pores 160 est supérieure ou égale à Sₒ/1000 et, de préférence, supérieure à Sₒ/100 ou Sₒ/50, où Sₒ est la surface de la section transversale de l'ouverture Oᵢ. Ici, la surface de la section transversale des pores 160 est également inférieure à Sₒ et, de préférence, inférieure à Sₒ/2 ou Sₒ/10.

Le diffuseur 150 comporte aussi une plaque supérieure 162 et une plaque inférieure 164, toutes les deux imperméables à l'eau. Ces plaques 162 et 164 recouvrent la totalité de la spirale pour contenir l'eau injectée à l'intérieur de cette spirale et l'empêcher de s'échapper verticalement. Les plaques 162 et 164 sont symétriques l'une de l'autre par rapport au plan P₁. La plaque 162 s'étend dans un plan situé entre le bord supérieur de la fente Fᵢ et le bord inférieur de la fente Fᵢ₊₁. Ici, elle est située dans le plan horizontal qui passe par le bord supérieur de la fente Fᵢ.

Dans le diffuseur 150, une partie de l'eau injectée circule comme représenté par la trajectoire 166 en pointillés sur la figure 10. Au fur et à mesure que l'eau injectée se rapproche du bord 156, sa vitesse et donc son énergie cinétique diminuent car la section transversale du conduit dans lequel elle circule augmente.

En même temps que l'eau injectée avance vers le bord 156, une partie de cette eau traverse la portion perméable de la cloison 152 comme représenté par les flèches 168. Ainsi, contrairement au diffuseur 96, le diffuseur 150 permet de diffuser l'eau injectée sur 360° autour de l'axe 90.

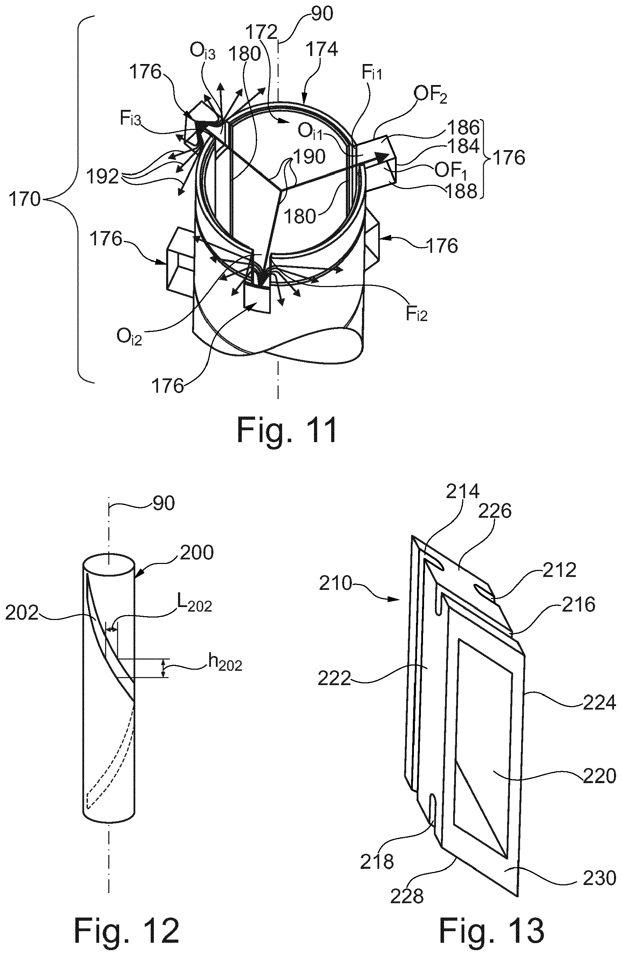

La figure 11 représente une canne 170 apte à être utilisée à la place de la canne 50. La canne 170 comprend :
- un tube interne 172,
- un tube externe 174 monté en rotation autour du tube 172 à l'aide de l'articulation 120, et
- un diffuseur 176 fixé en face de chaque ouverture Oᵢⱼ.

Le tube 172 est identique au tube 92 sauf que la fente 104 est remplacée par trois fentes 180 uniformément réparties sur la périphérie du tube 172. Ici, chaque fente 180 est identique à la fente 104 sauf que sa largeur est égale au tiers de la largeur de la fente 104.

Le tube 174 est identique au tube 94 sauf que chaque fente Fᵢ est remplacée par trois fentes Fᵢ₁, Fᵢ₂ et Fᵢ₃ uniformément réparties dans le même niveau Nᵢ, autour de la périphérie du tube 174. Chaque fente Fᵢⱼ, où j est un indice compris entre 1 et 3, est identique à la fente Fᵢ sauf que sa largeur est égale au tiers de la largeur de la fente Fᵢ.

La canne 170 est séparée en trois secteurs angulaires, SA₁, SA₂ et SA₃, délimitées par trois demi-plans verticaux ayant une même frontière commune confondue avec l'axe 90. Chaque demi-plan forme un angle horizontal de 120° avec les demi-plans immédiatement suivant et immédiatement précédent. Les fentes Fᵢ₁, Fᵢ₂ et Fᵢ₃ sont uniquement situées, respectivement, à l'intérieur des secteurs angulaires SA₁, SA₂ et SA₃. A l'intérieur d'un même secteur angulaire SAⱼ, les fentes Fᵢⱼ sont disposées les unes par rapport aux autres comme décrit pour les fentes Fᵢ. Ainsi, les fentes Fᵢⱼ se trouvent en vis-à-vis d'une fente 180 uniquement pour la position angulaire Pᵢ.

Contrairement à la canne 50, la canne 170 permet d'obtenir à chaque niveau Nᵢ simultanément plusieurs ouvertures Oᵢⱼ réparties autour de l'axe 90 pour injecter simultanément l'eau dans plusieurs directions différentes.

Le diffuseur 176 répartit l'eau injectée sur un secteur angulaire moins important que le diffuseur 96. Ici, chaque diffuseur 176 doit uniquement répartir l'eau injectée de la façon la plus homogène possible sur 120°.

Typiquement, tous les diffuseurs 176 sont structurellement identiques. Le diffuseur 176 comporte :
- une cloison verticale imperméable 184 en vis-à-vis de l'ouverture Oᵢⱼ,
- une plaque supérieure imperméable 186 horizontale s'étendant depuis le bord supérieur de la fente Fᵢⱼ jusqu'au bord supérieur de la cloison 184, et
- une plaque inférieure imperméable 188 horizontale s'étendant depuis le bord inférieur de la fente Fᵢⱼ jusqu'au bord inférieur de la cloison 184.

La largeur de la cloison 184 est supérieure ou égale à la largeur de la fente Fᵢⱼ. La surface de sa face interieure est donc au moins supérieure ou égale à la surface de la section transversale de la fente Fᵢⱼ. Ici, la surface de sa face interieure est aussi inférieure ou égale à 4 ou 3 ou 2 fois la surface de la section transversale de la fente Fᵢⱼ.

L'eau injectée forme d'abord un jet d'eau, représenté par les flèches 190, qui est projeté par chaque ouverture Oᵢⱼ sur la cloison 184 en vis-à-vis. Ce jet d'eau se brise sur cette cloison 184 en une multitude de jets secondaires, représentés par des flèches 192. Les jets secondaires se diffusent à travers des orifices OF₁ et OF₂ latéraux et verticaux. Comme pour le diffuseur 50, les bords des orifices OF₁ et OF₂ sont délimités par un bord vertical de la cloison 184, le tube 174 et les plaques 186 et 188.

La figure 12 représente un tube externe 200 apte à remplacer le tube externe 94. Le tube 200 est identique au tube 94 sauf que les fentes Fᵢ sont remplacées par une seule fente hélicoïdale continue 202. La fente 202 s'étend continûment depuis l'extrémité inférieure du tube 200 jusqu'à son extrémité supérieure en s'enroulant autour de l'axe 90. Elle fait au plus un tour complet autour de l'axe 90. Ici, elle fait plus de trois quart du tour complet. La hauteur h₂₀₂ de la fente 202, dans un plan vertical, est constante sur toute la périphérie du tube 200. De même, la largeur L₂₀₂ de la fente 202, dans un plan horizontal, est constante sur toute la périphérie du tube 200. La hauteur h₂₀₂ et la largeur L₂₀₂ sont, par exemple, déterminées comme décrit pour la fente Fᵢ. Ainsi, la hauteur H₂₀₂ et la largeur L₂₀₂ sont égaux, respectivement, à la hauteur et à la largeur de la fente Fᵢ.

Le tube 200 est monté en rotation sur lui-même autour du tube 92 à l'aide de l'articulation 120.

Dans ce mode de réalisation, l'ouverture Oᵢ est formé par la portion des fentes 104 et 202 en vis-à-vis. Dès lors, il existe une ouverture Oᵢ pour chaque position angulaire du tube 200 par rapport au tube 92.

Ce tube 200 peut être utilisé à la place du tube 94 dans la canne 50. Dans ce cas, les diffuseurs 96 sont fixés sans aucun degré de liberté à différents niveaux Nᵢ choisis le long de la hauteur du tube 200. Le nombre de positions Pᵢ possibles est alors limité par le nombre de diffuseurs 96 fixés sur le tube 200. Plus précisément, chaque position Pᵢ possible correspond alors à une position où l'ouverture Oᵢ est exactement en face de la cloison 144 d'un diffuseur 96. Dans ce cas, de préférence, l'unité 80 interrompt l'injection d'eau chaude lorsque le tube 200 est déplacé d'une position possible à la suivante, puis reprend l'injection d'eau chaude uniquement quand le tube 200 est immobilisé dans la position possible suivante. Cela évite d'injecter de l'eau chaude entre deux diffuseurs 96.

Dans un autre mode de réalisation, les tubes 92 et 200 sont combinés avec une traverse mobile 210 (Figure 13). La traverse 210 est une pièce rigide montée à coulissement à la fois dans les fentes 104 et 202. Plus précisément, la traverse 210 coulisse verticalement à l'intérieur de la fente 104 et coulisse le long d'un parcours hélicoïdal à l'intérieur de la fente 202. Ainsi, quand le tube 200 est tourné sur lui-même autour de l'axe 90 dans un sens, cela fait monter la traverse 210. Une rotation dans le sens inverse fait descendre la traverse 210.

Par exemple, la traverse 210 comprend une glissière verticale droite 212, une glissière verticale gauche 214, une glissière oblique supérieure 216 et une glissière oblique inférieure 218.

Les glissières 212 et 214 reçoivent à coulissement, respectivement, les bords droit et gauche de la fente 104. Les glissières 216 et 218 reçoivent à coulissement, respectivement, les bords supérieur et inférieur de la fente 202.

La traverse 210 s'étend à travers l'ouverture Oᵢ. Pour cela, la traverse 210 présente une section transversale de même forme que la section transversale de l'ouverture Oᵢ. Ici, cette section transversale est trapézoïdale.

Dans ce mode de réalisation, la traverse 210 est une pièce pleine traversée de part et part par un canal 220 qui débouche d'un côté directement à l'intérieur du tube 92 et du côté opposé directement à l'extérieur du tube 200. Ce canal 220 forme l'ouverture Oᵢ. Ainsi, la traverse 210 comporte des parois verticales droite 222 et gauche 224 et des parois obliques supérieure 226 et inférieure 228. Ces parois 222, 224, 226, 228 isolent fluidiquement l'eau injectée du jeu situé entre les tubes 92 et 200. Cette conformation permet donc d'éviter qu'une partie de l'eau injectée se propage entre les tubes 92 et 200.

Le diffuseur 96 est seulement fixé sans aucun degré de liberté sur la traverse 210. Ainsi, le diffuseur 96 se déplace verticalement en même temps que la traverse 210 se déplace. Il n'est donc plus nécessaire d'avoir un exemplaire du diffuseur 96 par niveau Nᵢ. Ici, un seul exemplaire du diffuseur 96 est utilisé pour l'ensemble des niveaux Nᵢ.

Par exemple, la traverse 210 présente une extrémité 230 qui fait saillie au-delà de la face extérieure du tube 200. Le diffuseur 96 est fixé sans aucun degré de liberté sur cette extrémité 230 en vis-à-vis de la bouche du canal 220 dans la même position que celle décrite par rapport à l'ouverture Oᵢ.

De nombreux autres modes de réalisation sont possibles. Par exemple, les cannes précédemment décrites peuvent être utilisées dans tout contexte où il est nécessaire d'injecter ou de soutirer à une altitude réglable un fluide dans un réservoir en perturbant le moins possible la stratification. Ainsi, le domaine d'application des cannes décrites n'est pas limité à celui des installations de chauffage domestique. Par exemple, elles peuvent être utilisées et dimensionnées pour des réservoirs de capacité beaucoup plus grande comme ceux que l'on rencontre dans les installations de chauffage collectif. Dans ce cas, le réservoir peut avoir un volume supérieur à 10 m³ ou 100 m³ et généralement inférieur à 80000 m³. Elles peuvent aussi être utilisées dans des dispositifs de distribution et de stockage de liquide refroidi.

Le chauffe-eau 20 peut être remplacé par d'autres technologies de chauffe-eau comme une chaudière à gaz, une chaudière électrique, un poêle ou autres. L'installation 2 peut aussi comporter plusieurs chauffe-eau de différentes technologies et non pas un seul comme représenté sur la figure 1. Dans ce dernier cas, typiquement, chaque chauffe-eau est raccordé à une canne d'injection respective située à l'intérieur du réservoir 40.

En variante, c'est le tube interne qui se déplace en rotation autour de l'axe 90 et c'est le tube externe qui est fixé sans aucun degré de liberté au réservoir 40. Dans une autre variante, les deux tubes interne et externe sont mobiles en rotation autour de l'axe 90. Dans ce dernier cas, un ou plusieurs moteurs sont utilisés pour déplacer à la fois les tubes interne et externe et atteindre les différentes positions Pᵢ souhaitées.

Le moteur 54 peut aussi être immergé à l'intérieur du réservoir 40.

Dans un autre mode de réalisation, la canalisation 32 est simultanément raccordée à plusieurs cannes commandées de façon identique par l'unité 80 de pilotage. Le fait de démultiplier le nombre de cannes d'injection permet de limiter le débit d'eau à injecter par chacune de ces cannes d'injection. De préférence, les différentes cannes d'injection sont alors disposées les unes par rapport aux autres pour diffuser l'eau injectée chacune sur un secteur angulaire respectif différent de celui dans lequel les autres cannes d'injection diffusent l'eau injectée. De préférence, ces secteurs angulaires respectifs ne se chevauchent pas.

Il n'est pas nécessaire que le dispositif 32 comporte à la fois une canne d'injection et une canne de soutirage. L'une des deux cannes 50, 62 peut donc être omise. C'est notamment le cas si la même canne est utilisée pour injecter et, en alternance, soutirer de l'eau.

En variante, des bagues sont logées entre les tubes interne et externe entre chaque niveau Nᵢ pour isoler fluidiquement chacun de ces niveaux les uns des autres. Ainsi, on évite qu'une partie de l'eau injectée puisse se propager entre les tubes interne et externe.

Les tubes interne et externe ne sont pas nécessairement réalisés dans des matériaux thermiquement isolants. Par exemple, ils peuvent aussi être réalisés dans d'autres matériaux thermiquement conducteurs comme des métaux tels que l'aluminium ou l'acier.

La fente 104 n'est pas nécessairement rectiligne et verticale. En variante, elle s'enroule aussi le long de l'axe 90 en faisant au plus un tour complet autour de cet axe. Dans ce dernier cas, les fentes Fᵢ ou la fente 202 s'enroulent autour de l'axe 90 d'une manière non parallèle à la fente 104 pour qu'il existe toujours au moins un point d'intersection entre la fente 104 et la projection orthogonale des fentes Fᵢ ou de la fente 202 sur la face extérieure du tube interne. Par exemple, les fentes sur les tubes interne et externe s'enroulent toutes les deux autour de l'axe 90 mais en sens inverse l'une de l'autre.

D'autres formes sont possibles pour les fentes Fᵢ. Par exemple, elles peuvent avoir une section transversale ovale ou circulaire ou autres. Quelle que soit la forme de la fente Fᵢ, celle-ci sera agencée sur la périphérie du tube 94 comme décrit précédemment dans le cas particulier des fentes rectangulaires. Ainsi, chaque position Pᵢ correspond à une ou plusieurs ouvertures Oᵢⱼ seulement au niveau Nᵢ. Dans un même mode de réalisation, il est aussi possible de mélanger des fentes de formes différentes pour, par exemple, différents niveaux Nᵢ.

Les fentes Fᵢ n'ont pas besoin d'être réparties uniformément sur toute la hauteur du tube 94. Par exemple, dans un mode de réalisation particulier, le nombre de fentes Fᵢ dans le tiers supérieur et/ou dans le tiers inférieur du tube 94 est supérieur au nombre de fentes situées entre ces tiers supérieur et inférieur.

De même, il n'est pas indispensable de répartir uniformément les positions angulaires des fentes Fᵢ. Par exemple, le secteur angulaire Sᵢ occupé par une fente Fᵢ est plus petit que le secteur angulaire Sₖ occupé par une autre fente Fₖ située à un autre niveau.

Il est aussi possible de ne pas répartir les fentes Fᵢ par ordre croissant ou décroissant de niveau Nᵢ au fur et à mesure que le tube 94 est tourné dans un sens. Par exemple, la fente F₅ est placée au niveau N₁ et la fente F₁ est placée au niveau N₅. Autrement dit, il est possible de permuter entre elles les fentes Fᵢ.

La cloison 144 n'est pas forcément un arc de cylindre. En variante, son intersection avec le plan P₁ suit une trajectoire quelconque qui présente un rayon de courbure dont le centre est contenu dans le plan P₁ de la fente F₁ et situé du côté de la cloison tournée vers le tube 94. De préférence, cette trajectoire ne présente pas de point d'inflexion.

La cloison 144 peut être perméable à l'eau pour diffuser l'eau sur 360° autour du tube 94.

La portion imperméable de la cloison 152 peut être remplacée par une portion perméable. Dans ce cas, cette portion perméable est directement en vis-à-vis de l'ouverture Oᵢ. De préférence, la perméabilité de la cloison 152 va toujours en augmentant au fur et à mesure que l'on se rapproche du bord 156.

La perméabilité de la cloison 152 peut aussi être augmentée en augmentant la densité des pores 160 par unité de surface. Dans ce cas, il n'est pas nécessaire de faire varier en plus la surface de la section transversale des pores 160.

Dans un autre mode de réalisation, la perméabilité de la section perméable de la cloison 152 est constante au fur et à mesure que l'on se rapproche du bord 156.

Il n'est pas nécessaire que la fente 202 fasse un tour complet autour de l'axe 90. En variante, cette fente 202 fait moins d'un demi-tour complet.

D'autres diffuseurs que le diffuseur 96 peuvent être fixés sur la traverse 210. Par exemple, le diffuseur 150 est fixé sur la traverse 210 en lieu et place du diffuseur 96.

La canne 170 peut aussi être adaptée pour que le nombre d'ouvertures Oᵢⱼ par niveau Nᵢ soit égal à deux ou soit strictement supérieur à trois.

Tout ce qui a précédemment été décrit s'applique au cas où le fluide injecté ou soutiré est un gaz ou un autre liquide qu'un liquide caloporteur et en particulier à d'autres liquides que l'eau.

Ce qui a précédemment été décrit dans le cas particulier de la canne d'injection s'applique aussi au cas d'une canne de soutirage.

Le mode de réalisation de la figure 12 ou 13 peut aussi être utilisé sans placer un diffuseur en vis-à-vis de chaque ouverture. En effet, il permet d'augmenter considérablement le nombre de niveaux Nᵢ sans pour autant diminuer le diamètre hydraulique de chaque ouverture. Ce dernier mode de réalisation peut aussi être mis en oeuvre avec ou sans la traverse mobile 210.

## Revendications

1. Canne configurable d'injection ou de soutirage d'un fluide contenu dans un réservoir, cette canne étant apte à injecter ou à soutirer le fluide à un niveau réglable à l'intérieur du réservoir, cette canne comportant :
- un tube interne (92) et un tube externe (94 ; 200) s'étendant tous les deux autour d'un même axe (90) de rotation, le tube externe entourant le tube interne, chaque tube comportant une paroi cylindrique imperméable au fluide et séparant l'intérieur du tube de l'extérieur du tube,
- plusieurs ouvertures (Oᵢ ; Oᵢⱼ) réparties le long de l'axe de rotation à différents niveaux Nᵢ, chaque ouverture (Oᵢ ; Oᵢⱼ) raccordant fluidiquement l'intérieur du tube interne à l'extérieur du tube externe pour injecter ou soutirer le fluide du réservoir, chacune de ces ouvertures (Oᵢ ; Oᵢⱼ) étant réalisée par la mise en vis-à-vis d'une fente interne (104) ménagée dans la paroi du tube interne et d'une fente externe (Fᵢ ; Fᵢⱼ ; 202) ménagée dans la paroi du tube externe, la position des fentes interne et externe sur, respectivement, les tubes interne et externe étant telles que chaque ouverture (Oᵢ; Oᵢⱼ) apparaît uniquement pour une position angulaire Pᵢ respective du tube interne par rapport au tube externe, où l'indice i est le numéro d'ordre du niveau Nᵢ, et
- une articulation (120) permettant un déplacement en rotation, autour de l'axe de rotation, de l'un des tubes par rapport à l'autre pour passer d'une position angulaire Pᵢ quelconque à une autre position angulaire Pₖ quelconque et différente,
**caractérisée en ce que** la canne comporte également un diffuseur (96 ; 150 ; 176) en vis-à-vis de chaque ouverture (Oᵢ ; Oᵢⱼ) pour diffuser le jet de fluide qui traverse cette ouverture uniquement dans des directions perpendiculaires à l'axe de rotation, ce diffuseur comportant :
- une cloison (144 ; 152 ; 184) située en vis-à-vis de la bouche de cette ouverture (Oᵢ ; Oᵢⱼ), et
- des plaques supérieure (140 ; 162 ; 186) et inférieure (142;164;188) situées immédiatement, respectivement, au-dessus et au-dessous de cette ouverture (Oᵢ ; Oᵢⱼ) et s'étendant chacune depuis le tube externe jusqu'à des bords, respectivement, supérieur et inférieur de la cloison.

2. Canne selon la revendication 1, dans laquelle :
- les plaques supérieure (140 ; 162 ; 186) et inférieure (142;164;188) sont imperméables au fluide et dépourvues d'orifice traversant, et
- le diffuseur comporte un ou plusieurs orifices (OF₁, OF₂) ou des pores (160) qui débouchent directement à l'intérieur du réservoir, chacun de ces orifices ou pores étant uniquement situé entre les plaques supérieure et inférieure de manière à diffuser le jet de fluide qui traverse l'ouverture, en vis-à-vis de laquelle est situé le diffuseur, uniquement dans des directions perpendiculaires à l'axe de rotation.

3. Canne selon la revendication 1 ou 2, dans laquelle la cloison (152) s'enroule autour du tube externe en s'éloignant progressivement de ce tube externe et fait au moins un tour complet autour de l'axe de rotation, cette cloison comportant des pores (160) la rendant perméable au fluide, ces pores étant répartis au moins sur la totalité du tour complet de la cloison, autour de l'axe de rotation, le plus éloigné de cet axe de rotation.

4. Canne selon la revendication 3, dans laquelle la taille des pores (160) et/ou la densité des pores par unité de surface augmente au fur et à mesure que la cloison (152) s'éloigne de l'axe de rotation pour augmenter la perméabilité de cette cloison au fur et à mesure que la cloison s'éloigne de l'axe de rotation.

5. Canne selon l'une quelconque des revendications 3 à 4, dans laquelle la cloison (152) fait au moins deux tours complets autour de l'axe de rotation.

6. Canne selon l'une quelconque des revendications 3 à 5, dans laquelle la cloison (152) comporte une portion imperméable au fluide directement en vis-à-vis de l'ouverture, la surface de cette portion imperméable étant supérieure ou égale à la surface de la section transversale de l'ouverture.

7. Canne selon l'une quelconque des revendications précédentes, dans laquelle les fentes interne (104) et externe (202) s'étendent continûment sur au moins 80 % de la hauteur des tubes interne et externe, au moins l'une de ces fentes s'enroulant autour de l'axe de rotation en faisant moins d'un tour complet autour de cet axe de rotation et l'autre de ces fentes étant rectiligne ou s'enroulant, de façon non-parallèle à l'autre fente, autour de l'axe de rotation en faisant au plus un tour complet autour de cet axe de rotation.

8. Canne selon la revendication 7, dans laquelle :
- la canne comporte une traverse mobile (210), s'étendant dans une direction perpendiculaire à l'axe de rotation, depuis l'intérieur du tube interne jusqu'à l'extérieur du tube externe, cette traverse étant montée à coulissement à la fois à l'intérieur de la fente interne et de la fente externe de sorte que la rotation d'un des tubes autour de l'autre entraîne un déplacement de la traverse au moins dans une direction parallèle à l'axe de rotation, et
- le diffuseur est fixé sans aucun degré de liberté sur cette traverse.

9. Canne selon la revendication 1 ou 2, dans laquelle la cloison (144) du diffuseur s'étend depuis un premier demi-plan jusqu'à un second demi-plan en suivant une trajectoire située dans un plan perpendiculaire à l'axe de rotation, le centre de courbure de cette trajectoire étant situé du côté de la cloison tournée vers le tube externe et cette trajectoire étant dépourvue de point d'inflexion, la frontière de ces premier et second demi-plans étant confondue avec l'axe de rotation et l'angle au sommet du secteur angulaire contenant la cloison et délimité par ces premier et second demi-plans étant compris entre 120° et 240°, au-delà de ces deux demi-plans, la paroi disparaissant pour ménager de chaque côté d'un plan contenant l'axe de rotation et passant par l'ouverture (Oᵢ ; Oᵢⱼ) en vis-à-vis du diffuseur, des orifices (OF₁, OF₂) par l'intermédiaire desquelles le fluide est injecté ou soutiré, le cumul des diamètres hydrauliques de ces orifices étant supérieur au diamètre hydraulique de l'ouverture en vis-à-vis du diffuseur.

10. Canne selon la revendication 9, dans laquelle l'angle au sommet du secteur angulaire est égal à 180° à plus ou moins 5 % près.

11. Canne selon l'une quelconque des revendications précédentes, dans laquelle la canne comporte pour chaque niveau Nᵢ plusieurs ouvertures (Oᵢⱼ) uniformément réparties sur la périphérie du tube externe.

12. Canne selon l'une quelconque des revendications précédentes, dans laquelle chaque ouverture présente un diamètre hydraulique Dₕᵢ et la distance entre le centre géométrique de l'ouverture et la projection du centre géométrique de cette ouverture sur la cloison en vis-à-vis du diffuseur, le long d'une direction radiale perpendiculaire à l'axe de rotation et passant par ce centre géométrique, est inférieure à 10Dₕᵢ.

13. Dispositif de stockage et de distribution d'un fluide, ce dispositif comportant :
- un réservoir (40) apte à contenir le fluide,
- une canne configurable (50, 62 ; 170) d'injection ou de soutirage du fluide contenu dans le réservoir, cette canne étant logée à l'intérieur de ce réservoir et apte à injecter ou à soutirer le fluide à un niveau réglable à l'intérieur du réservoir,
- un moteur commandable (54, 70) apte à modifier la configuration de la canne pour régler le niveau d'injection ou de soutirage du fluide,
- des capteurs de température pour mesurer la température à différents niveaux à l'intérieur du réservoir, et
- une unité (80) de pilotage du moteur apte à commander le moteur en fonction des mesures des capteurs de température :
• pour injecter le fluide dans une strate du fluide contenu à l'intérieur du réservoir dont la température est la plus proche de la température du fluide injecté, et/ou
• pour soutirer du fluide stocké à l'intérieur du réservoir dans une strate dont la température est la plus proche d'une consigne de température pré-déterminée,
**caractérisé en ce que** la canne configurable est conforme à l'une quelconque des revendications précédentes.

## Patentansprüche

1. Konfigurierbares Rohr zur Einspritzung oder Entnahme eines in einem Behälter enthaltenen Fluids, wobei dieses Rohr geeignet ist, das Fluid auf einer einstellbaren Höhe ins Innere des Behälters einzuspritzen oder aus ihm zu entnehmen, wobei dieses Rohr aufweist:
- ein Innenrohr (92) und ein Außenrohr (94; 200), die sich beide um ein und dieselbe Drehachse (90) herum erstrecken, wobei das Außenrohr das Innenrohr umgibt, wobei jedes Rohr eine zylindrische Wand aufweist, die für das Fluid undurchlässig ist und das Innere des Rohres von der Außenseite des Rohres trennt,
- mehrere Öffnungen (Oᵢ; Oᵢⱼ), die auf verschiedenen Höhen Nᵢ entlang der Drehachse verteilt sind, wobei jede Öffnung (Oᵢ; Oᵢⱼ) das Innere des Innenrohrs mit der Außenseite des Außenrohres fluidisch verbindet, um das Fluid in den Behälter einzuspritzen oder aus ihm zu entnehmen, wobei jede dieser Öffnungen (Oᵢ; Oᵢⱼ) hergestellt wird, indem ein innerer Schlitz (104), der in der Wand des Innenrohres ausgebildet ist, und ein äußerer Schlitz (Fᵢ; Fᵢⱼ; 202), der in der Wand des Außenrohres ausgebildet ist, einander gegenüberliegend angeordnet werden, wobei die Positionen des inneren und des äußeren Schlitzes an dem Innenrohr bzw. dem Außenrohr derart sind, dass jede Öffnung (Oᵢ; Oᵢⱼ) ausschließlich für eine jeweilige Winkelposition Pᵢ des Innenrohres bezüglich des Außenrohres erscheint, wobei der Index i die laufende Nummer der Höhe Nᵢ ist, und
- ein Gelenk (120), das eine Drehbewegung eines der Rohre bezüglich des anderen um die Drehachse ermöglicht, um aus einer beliebigen Winkelposition Pᵢ in eine beliebige andere, von dieser verschiedene Winkelposition Pₖ zu gelangen, **dadurch gekennzeichnet, dass** das Rohr auch einen Zerstäuber (96; 150; 176) gegenüber jeder Öffnung (Oᵢ; Oᵢⱼ) aufweist, um den Fluidstrahl, welcher diese Öffnung durchquert, ausschließlich in Richtungen zu zerstäuben, die zu der Drehachse senkrecht sind, wobei dieser Zerstäuber aufweist:
- eine Trennwand (144; 152; 184), die sich gegenüber der Mündung dieser Öffnung (Oᵢ; Oᵢⱼ) befindet, und
- eine obere (140; 162; 186) und eine untere (142; 164; 188) Platte, die sich unmittelbar oberhalb bzw. unterhalb dieser Öffnung (Oᵢ; Oᵢⱼ) befinden und sich jeweils von dem Außenrohr bis zu einem oberen bzw. unteren Rand der Trennwand erstrecken.

2. Rohr nach Anspruch 1, wobei:
- die obere (140; 162; 186) und die untere (142; 164; 188) Platte für das Fluid undurchlässig sind und kein Durchgangsloch aufweisen, und
- der Zerstäuber eine oder mehrere Löcher (OF₁, OF₂) oder Poren (160) aufweist, welche direkt ins Innere des Behälters münden, wobei jedes dieser Löcher oder jede dieser Poren sich ausschließlich zwischen der oberen und der unteren Platte befindet, um den Fluidstrahl, welcher die Öffnung durchquert, gegenüber der sich der Zerstäuber befindet, ausschließlich in Richtungen zu zerstäuben, die zu der Drehachse senkrecht sind.

3. Rohr nach Anspruch 1 oder 2, wobei sich die Trennwand (152) um das Außenrohr herum erstreckt, wobei sie sich zunehmend von diesem Außenrohr entfernt, und wenigstens einmal vollständig um die Drehachse herum verläuft, wobei diese Trennwand Poren (160) aufweist, die sie für das Fluid durchlässig machen, wobei diese Poren wenigstens auf der Gesamtheit des sich vollständig um die Drehachse herum erstreckenden Teils der Trennwand verteilt sind, der am weitesten von dieser Drehachse entfernt ist.

4. Rohr nach Anspruch 3, wobei sich die Größe der Poren (160) und/oder die Dichte der Poren pro Flächeneinheit in dem Maße erhöht, wie sich die Trennwand (152) von der Drehachse entfernt, um die Durchlässigkeit dieser Trennwand in dem Maße zu erhöhen, wie sich die Trennwand von der Drehachse entfernt.

5. Rohr nach einem der Ansprüche 3 bis 4, wobei die Trennwand (152) wenigstens zweimal vollständig um die Drehachse herum verläuft.

6. Rohr nach einem der Ansprüche 3 bis 5, wobei die Trennwand (152) einen für das Fluid undurchlässigen Abschnitt direkt gegenüber der Öffnung aufweist, wobei di Fläche dieses undurchlässigen Abschnitts größer als die oder gleich der Fläche des Querschnitts der Öffnung ist.

7. Rohr nach einem der vorhergehenden Ansprüche, wobei sich der innere (104) und der äußere (202) Schlitz durchgehend über wenigstens 80 % der Höhe des Innen- und des Außenrohres erstrecken, wobei wenigstens einer dieser Schlitze um die Drehachse herum verläuft und sich dabei wenigstens einmal vollständig um diese Drehachse herum erstreckt und der andere dieser Schlitze geradlinig ist oder so um die Drehachse herum verläuft, dass er zu dem anderen Schlitz nicht parallel ist, und sich dabei höchstens einmal vollständig um diese Drehachse herum erstreckt.

8. Rohr nach Anspruch 7, wobei:
- das Rohr eine bewegliche Querstrebe (210) aufweist, die sich in einer zu der Drehachse senkrechten Richtung vom Inneren des Innenrohres bis zur Außenseite des Außenrohres erstreckt, wobei diese Querstrebe im Inneren sowohl des inneren als auch des äußeren Schlitzes derart gleitend gelagert ist, dass die Drehung eines der Rohre um das andere eine Verschiebung der Querstrebe wenigstens in einer zu der Drehachse parallelen Richtung zur Folge hat, und
- der Zerstäuber ohne jeden Freiheitsgrad an dieser Querstrebe befestigt ist.

9. Rohr nach Anspruch 1 oder 2, wobei sich die Trennwand (144) des Zerstäubers von einer ersten Halbebene bis zu einer zweiten Halbebene erstreckt und dabei einem Weg folgt, der sich in einer zu der Drehachse senkrechten Ebene befindet, wobei sich der Krümmungsmittelpunkt dieses Weges auf der dem Außenrohr zugewandten Seite der Trennwand befindet und dieser Weg keinen Knickpunkt aufweist, wobei die Grenze dieser ersten und zweiten Halbebene mit der Drehachse zusammenfällt und der Winkel an der Spitze des Winkelsektors, der die Trennwand enthält und von dieser ersten und dieser zweiten Halbebene begrenzt wird, zwischen 120° und 240° liegt, wobei jenseits dieser zwei Halbebenen die Wand verschwindet, um beiderseits einer Ebene, welche die Drehachse enthält und durch die Öffnung (Oᵢ; Oᵢⱼ) gegenüber dem Zerstäuber verläuft, Löcher (OF₁, OF₂) auszubilden, über welche das Fluid eingespritzt oder entnommen wird, wobei die Summe der hydraulischen Durchmesser dieser Löcher größer als der hydraulische Durchmesser der Öffnung gegenüber dem Zerstäuber ist.

10. Rohr nach Anspruch 9, wobei der Winkel an der Spitze des Winkelsektors bis auf eine maximale Abweichung von plus oder minus 5 % gleich 180°ist.

11. Rohr nach einem der vorhergehenden Ansprüche, wobei das Rohr für jede Höhe Nᵢ mehrere Öffnungen (Oᵢⱼ) aufweist, die gleichmäßig auf dem Umfang des Außenrohres verteilt sind.

12. Rohr nach einem der vorhergehenden Ansprüche, wobei jede Öffnung einen hydraulischen Durchmesser Dₕᵢ aufweist und der Abstand zwischen dem geometrischen Mittelpunkt der Öffnung und der Projektion des geometrischen Mittelpunkts dieser Öffnung auf die Trennwand gegenüber dem Zerstäuber entlang der radialen Richtung, die zu der Drehachse senkrecht ist und durch den geometrischen Mittelpunkt verläuft, kleiner als 10Dₕᵢ ist.

13. Vorrichtung zur Speicherung und Verteilung eines Fluids, wobei diese Vorrichtung aufweist:
- einen Behälter (40), der geeignet ist, das Fluid zu enthalten,
- ein konfigurierbares Rohr (50, 62; 170) zur Einspritzung oder Entnahme des in dem Behälter enthaltenen Fluids, wobei dieses Rohr im Inneren dieses Behälters aufgenommen ist und geeignet ist, das Fluid auf einer einstellbaren Höhe ins Innere des Behälters einzuspritzen oder aus ihm zu entnehmen,
- einen steuerbaren Motor (54, 70), der geeignet ist, die Konfiguration des Rohres zu ändern, um die Höhe der Einspritzung oder Entnahme des Fluids zu regeln,
- Temperatursensoren zum Messen der Temperatur auf verschiedenen Höhen im Inneren des Behälters, und
- eine Einheit (80) zur Vorsteuerung des Motors, die geeignet ist, den Motor in Abhängigkeit von den Messungen der Temperatursensoren zu steuern:
• um das Fluid in eine Schicht des im Inneren des Behälters enthaltenen Fluids einzuspritzen, deren Temperatur der Temperatur des eingespritzten Fluids am nächsten kommt, und/oder
• um Fluid, das im Inneren des Behälters gespeichert ist, aus einer Schicht zu entnehmen, deren Temperatur einer vorbestimmten Solltemperatur am nächsten kommt,
**dadurch gekennzeichnet, dass** das konfigurierbare Rohr mit einem der vorhergehenden Ansprüche konform ist.

## Claims

1. Configurable rod for injecting or withdrawing a fluid contained in a tank, this rod being able to inject or to withdraw the fluid at an adjustable level inside the tank, this rod comprising:
- an internal tube (92) and an external tube (94; 200), both extending around the same axis (90) of rotation, the external tube surrounding the internal tube, each tube comprising a cylindrical wall impervious to the fluid and separating the inside of the tube from the outside of the tube,
- several openings (Oᵢ; Oᵢⱼ) distributed along the axis of rotation at various levels Nᵢ, each opening (Oᵢ; Oᵢⱼ) fluidically connecting the inside of the internal tube to the outside of the external tube so as to inject or withdraw the fluid of the tank, each of these openings (Oᵢ; Oᵢⱼ) being created by bringing an internal slot (104) formed in the wall of the internal tube into register with an external slot (Fᵢ; Fᵢⱼ; 202) formed in the wall of the external tube, the position of the internal and external slots on the internal and external tubes respectively being such that each opening (Oᵢ; Oᵢⱼ) appears only for one respective angular position Pᵢ of the internal tube with respect to the external tube, where the suffix i is the order number of the level Nᵢ, and
- an articulation (120) allowing one of the tubes to be moved in rotation about the axis of rotation with respect to the other in order to move from any angular position Pᵢ to any other and different angular position Pₖ,
**characterized in that** the rod also comprises a diffuser (96; 150; 176) facing each opening (Oᵢ; Oᵢⱼ) to diffuse the jet of fluid that passes through this opening only in directions perpendicular to the axis of rotation, this diffuser comprising:
- a wall (144; 152; 184) situated facing the mouth of this opening (Oᵢ; Oᵢⱼ), and
- upper (140; 162; 186) and lower (142; 164; 188) plates respectively situated immediately above and below this opening (Oᵢ; Oᵢⱼ) and each extending from the external tube as far as, respectively, the upper and lower edges of the wall.

2. Rod according to Claim 1, in which:
- the upper (140; 162; 186) and lower (142; 164; 188) plates are impervious to the fluid and have no through-orifice, and
- the diffuser comprises one or several orifices (OF₁, OF₂) or pores (160) which open directly to the inside of the tank, each of these orifices or pores being situated only between the upper and lower plates so as to diffuse the jet of fluid that passes through the opening, facing which the diffuser is situated, only in directions perpendicular to the axis of rotation.

3. Rod according to Claim 1 or 2, in which the wall (152) is wound around the external tube diverging progressively from this external tube and makes at least one full turn about the axis of rotation, this wall comprising pores (160) making it permeable to the fluid, these pores being distributed at least over the entirety of the full turn of the wall, about the axis of rotation, that is furthest away from this axis of rotation.

4. Rod according to Claim 3, in which the size of the pores (160) and/or the pore density per unit area increases as the wall (152) diverges from the axis of rotation so as to increase the permeability of this wall as the wall diverges from the axis of rotation.

5. Rod according to either one of Claims 3 and 4, in which the wall (152) makes at least two full turns about the axis of rotation.

6. Rod according to any one of Claims 3 to 5, in which the wall (152) comprises a portion impervious to the fluid directly facing the opening, the surface area of this impervious portion being greater than or equal to the cross-sectional area of the opening.

7. Rod according to any one of the preceding claims, in which the internal (104) and external (202) slots extend continuously over at least 80% of the height of the internal and external tubes, at least one of these slots being wound around the axis of rotation and making less than one full turn about this axis of rotation and the other of these slots being rectilinear or wound, not parallel to the other slot, around the axis of rotation and making at most one full turn about this axis of rotation.

8. Rod according to Claim 7, in which:
- the rod comprises a mobile crosshead (210), extending in a direction perpendicular to the axis of rotation, from the inside of the internal tube to the outside of the external tube, this crosshead being mounted to slide both inside the internal slot and the external slot so that the rotation of one of the tubes about the other causes the crosshead to move at least in a direction parallel to the axis of rotation, and
- the diffuser is fixed to this crosshead with no degree of freedom.

9. Rod according to Claim 1 or 2, in which the wall (144) of the diffuser extends from a first half-plane to a second half-plane in a path lying in a plane perpendicular to the axis of rotation, the centre of curvature of this path being situated on that side of the wall that faces towards the external tube and this path having no point of inflection, the boundary between these first and second half-planes coinciding with the axis of rotation and the vertex angle of the angular sector containing the wall and delimited by these first and second half-planes being comprised between 120° and 240°, beyond these two half-planes, the wall disappearing to form, on each side of a plane containing the axis of rotation and passing through the opening (Oᵢ; Oᵢⱼ) in register with the diffuser, orifices (OF₁, OF₂) by means of which the fluid is injected or withdrawn, the combined total of the hydraulic diameters of these orifices being greater than the hydraulic diameter of the opening facing the diffuser.

10. Rod according to Claim 9, in which the vertex angle of the angular sector is equal to 180° to within plus or minus 5%.

11. Rod according to any one of the preceding claims, in which the rod comprises, for each level Nᵢ, several openings (Oᵢⱼ) uniformly distributed on the periphery of the external tube.

12. Rod according to any one of the preceding claims, in which each opening has a hydraulic diameter Dₕᵢ and the distance between the geometric centre of the opening and the projection of the geometric centre of this opening onto the facing wall of the diffuser, in a radial direction perpendicular to the axis of rotation and passing through this geometric centre, is less than 10Dₕᵢ.

13. Device for storing and distributing a fluid, this device comprising:
- a tank (40) able to contain the fluid,
- a configurable rod (50, 62; 170) for injecting or withdrawing the fluid contained in the tank, this rod being housed inside this tank and able to inject or to withdraw the fluid at an adjustable level inside the tank,
- a controllable motor (54, 70) able to alter the configuration of the rod so as to adjust the level at which the fluid is injected or withdrawn,
- temperature sensors for measuring the temperature at various levels inside the tank, and
- a motor control unit (80) able to control the motor as a function of the measurements from the temperature sensors:
• to inject the fluid into a stratum of the fluid contained inside the tank the temperature of which is the closest to the temperature of the injected fluid, and/or
• to withdraw fluid stored inside the tank from a stratum the temperature of which is the closest to a predetermined setpoint temperature,
**characterized in that** the configurable rod is in accordance with any one of the preceding claims.
